# EUROPEAN PATENT APPLICATION

(11) **EP 0 704 815 A2**
(43) Date of publication of application: **03.04.1996**
(21) Application number: 95115201.6
(22) Date of filing: 27.09.1995
(51) Int. Cl.: G06K 7/10, G06K 19/077

(54) **High field programmable transponder system and method**

(30) Priority: 30.09.1994 US 316653
(71) Applicant: Hughes Identification Devices, Inc., Los Angeles, California 90045-0066 (US)
(72) Inventor: De Vall, Franklin B., Boulder, Colorado 80302 (US)
(74) Representative: Otten, Hajo, Dr.-Ing.

(57) **Abstract**

A transponder is programmed with an identification code or other information through a write antenna (6) that is smaller in size and has fewer turns than the convention read antenna (22, 24) used for later reading out the programmed information. An RF field that is much stronger than the field normally encountered by the transponder must be used to write information into the transponder. This effectively prevents inadvertent programming of the transponder memory (32) by a read field or electrostatic discharges, and eliminates the need for a special access code and associated circuitry that would otherwise be required for RF programming.

## Description

### BACKGROUND OF THE INVENTION

### Field of the Invention

This invention relates to transponder systems in which the transponder transmits information in response to an RF excitation signal, and more particularly to a system and method for writing information into a transponder with an RF field.

### Description of the Related Art

Radio frequency (RF) transponders are commonly used to identify an object to which the transponder is attached, and/or to communicate various types of information about the object back to a receiving station. Such systems typically employ an exciter/reader that transmits an RF excitation signal, and a transponder that is energized by the excitation signal to transmit an identification code or other stored information back to the exciter/reader. The transponders generally use a single antenna coil to both receive the excitation signal, and to transmit back an identification signal. A known transponder system of this type is described in U.S. Patent No. 4,730,188 to Milheiser.

Two different techniques have been used to program an identification code into a transponder. In one, a pair of tabs are connected to the data input for the transponder integrated circuit (IC) chip. An identification code is applied to the chip from a programmer through a pair of programmer pins that contact the data tabs for the transponder. This is a relatively time consuming process, with each separate transponder card inserted by hand into the programmer one at a time.

The other technique involves the transmission of an identification code as an RF signal that is detected by the transponder antenna and applied via the antenna inputs to the transponder chip. A special code must precede the write data to ensure that the chip is not inadvertently programmed later on during normal use when it receives an interrogation signal from the exciter/reader. This adds to the circuit complexity of both the programmer and the transponder chip, and again the programming process requires manual handling of the transponder cards and is relatively time consuming.

### SUMMARY OF THE INVENTION

The present invention seeks to provide a new type of transponder and an associated programming method that allows the transponder to be programmed without the need for a special access code, and that also allows the transponder chip to be programmed in a very rapid and cost effective sequence while still at the wafer level.

These goals are achieved by using two separate antennae on the transponder: the usual read antenna for communicating with the exciter/reader, and a much smaller antenna that is dedicated to writing an identification code or other desired information into the transponder memory. The write antenna has substantially fewer turns that the conventional read antenna and preferably produces an actuating signal for the transponder that is at least one hundred times less powerful than the signal produced by the read antenna for equal RF field strengths. A very high strength field, considerably higher than the fields that would be encountered during normal use of the transponder, is needed to write in the identification code. Since the write antenna does not respond to RF signals within the normal interrogation range, no access code is required when the transponder is initially programmed to prevent later inadvertent reprogramming.

The write antenna is preferably implemented on the same IC chip as the transponder circuitry, surrounding the circuitry. Numerous chips for different transponders can be programmed while still in the wafer state by a step-and-repeat process, after which the wafer is diced into separate chips.

The use of a high field for programming purposes and a much lower field for reading the transponder thus facilitates a quicker and less expensive programming method that reduces the amount of handling for the individual transponders. The high fields required for programming also protect against the risk of inadvertent programming by electrostatic discharge (ESD) and ambient RF fields.

These and other features and advantages of the invention will be apparent to those skilled in the art from the following detailed description, taken together with the accompanying drawings.

### BRIEF DESCRIPTION OF THE DRAWINGS

FIG. 1 is a simplified plan view of a semiconductor wafer on which separate transponder circuits and associated write antennae have been formed;
FIG. 2 is a plan view of a transponder that includes a die taken from the wafer of FIG. 1, and a large read antenna;
FIG. 3 is a block diagram of the transponder circuitry;
FIG. 4 is a partially schematic block diagram of an exciter/reader that can be used with the invention;
FIGs. 5 and 6 are respectively elevation and plan views illustrating a step-and-repeat method of programming transponder circuits with the invention at the wafer stage; and
FIG. 7 is a simplified elevation view illustrating an alternate transponder programming mechanism.

### DETAILED DESCRIPTION OF THE INVENTION

The invention provides an RF programming mechanism for a transponder that is effectively isolated from the RF signals that are used to read out a programmed identification code or other information. This is done by adding a separate write antenna that is significantly smaller and has significantly has fewer turns than the normal antenna used for reading out the information.

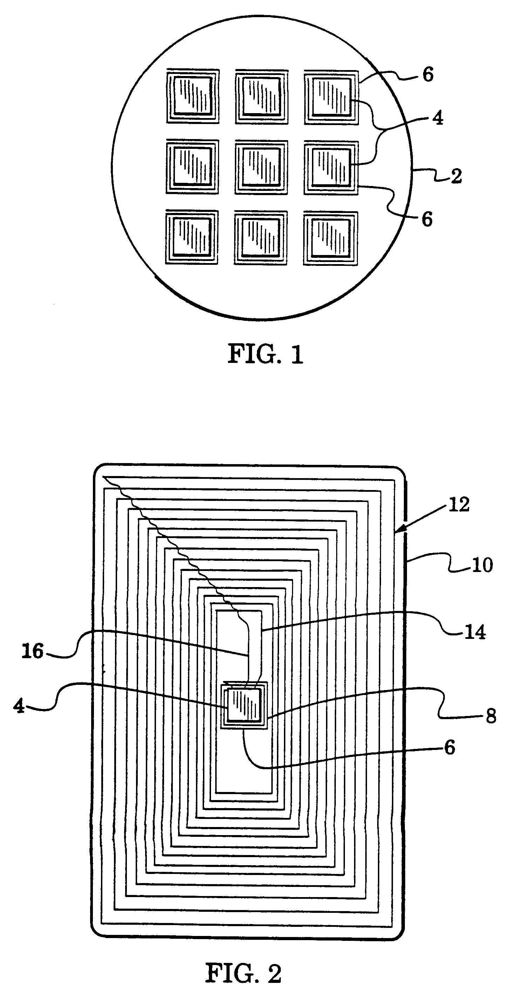

FIG. 1 is a simplified view of a semiconductor wafer 2 upon which an array of transponder circuits 4 has been fabricated in a conventional fashion. The wafer would then normally be divided into separate dice, with a complete circuit on each individual die, and each die assembled into a separate transponder. In a preferred form of the invention, however, a small write antenna 6 is fabricated on the wafer within each die area. The write antennae are preferably formed by conventional photolithographic techniques, although they can also be stamped or embossed on the wafer. Each write antenna 6 typically has only one or two turns, and is only slightly larger than its associated transponder circuit 4. Additional turns could be provided if desired, either in the same plane or in multiple layers that are separated by thin dielectric layers. A multi-layer antenna can be more efficient because of the self-inductance and self-capacitance between its different layers.

Although only nine circuits and surrounding antennae are illustrated on the wafer of FIG. 1, typically a much larger array would be fabricated on each wafer. Integrated circuit wafers are commonly provided with a 4-8 inch (10.2-20.4 cm) diameter; typical dimensions for each die are 0.03-0.06 inch (0.76-1.52 mm) along one side and 0.04-0.07 inch (1.02-1.78 mm) along the orthogonal side. The transponder circuits are protected by a conventional die passivation overcoat, which also extends over the write antennae. Electrical connections between the opposite ends of each antenna and its associated transponder circuit can be made by means of metalized traces that traverse the passivation layer. The traces extend through voids in the passivation to connect with write input pads in the transponder circuit, and with contact pads at the opposite ends of the antenna.

After the antenna/circuit fabrication has been completed, the wafer 2 is diced so that each separate transponder circuit and its associated write antenna are on a separate die. As shown in FIG. 2, each die 8 can be mounted on a considerably larger substrate 10, which typically approximates the size of a credit card. The substrate includes a conventional read antenna 12, which commonly has on the order of 100 turns formed in a rectangular coil around its center. The die can be positioned at a central location on the substrate as shown in the figure, or towards the periphery of the substrate outside the read antenna. The inner and outer ends of the read antenna 12 are connected by respective lead lines 14 and 16 to read input pads on the circuit 4; the outer lead line 16 is insulated from the remainder of the read antenna by a dielectric layer. Instead of supporting it on a separate substrate, the read antenna 12 can be fabricated as a stiff stand-alone coil. When a substrate is used, it can be implemented as two sheets of plastic between which the read coil and die are laminated, or the read antenna can be printed or adhered to one side of a substrate and the die 8 attached with an adhesive.

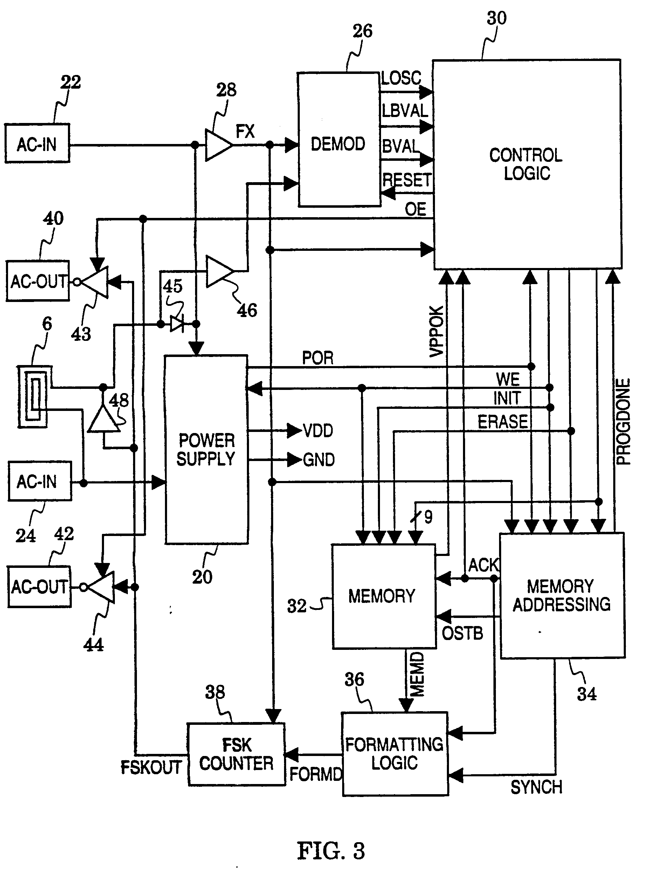

As described below in connection with FIG. 3, the small write antenna 6 provides an input to a write subcircuit within the transponder circuitry 4 for writing in information such as an identification code, while the read antenna 12 provides an input to a read subcircuit for reading out an identification code that has previously been written into the circuit's memory. The write antenna 8 is so much smaller than the read antenna 12 and has so many fewer turns that it generates a much smaller signal than does the read antenna, preferably at least 100 times smaller, when the two antennae are exposed to the same rf field (the signal strength developed by a winding varies generally directly with both the number of turns and the size of the winding). The antennae dimensions are selected so that a very large field, considerably larger than the fields to which the transponder would normally be exposed in conventional usage, is required for the write antenna to develop a signal that exceeds the threshold of the transponder's write circuitry, whereas the read antenna 12 is large enough for it to develop a signal that exceeds the threshold of the transponder's read circuitry when it is exposed to the rf field from a conventional reader/exciter. The typical field developed by an exciter/reader at a distance of 0.5 meters is 1-2 Amp/meter RMS. Depending upon the particular transponder design, an equivalent amount of power up to 6 db more power may be required to write an identification code into the circuitry.

FIG. 3 is a block diagram of a typical transponder circuit, to which the special write antenna of the present invention has been added. Identification codes are typically written into a transponder memory with either a frequency shift key (FSK) or a pulse width modulation (PWM) format; in FIG. 3 the FSK format is used.

The circuit includes a full-wave bridge rectifier power supply 20 that receives inputs from the opposite ends of the read antenna, which are connected to AC input terminals 22 and 24; a demodulator 26 that interprets the bit-serial FSK command stream received from the input terminal 22 through a Schmitt trigger input buffer 28; a control logic section 30 that supervises the operation of the overall circuit; a memory 32 that includes a 256 bit EEPROM for data storage, programming voltage generation and monitoring; a memory address logic section 34 that controls the sequencing of the memory 32 and performs various timing functions; a formatting logic section 36 that encodes the memory data in a Manchester format; an FSK counter 38 that generates a response frequency according to the state of the output from the formatting logic section 36; a pair of output terminals 40 and 42 that route the response signal to the read antenna for transmission back to an exciter/reader; and a pair of open-drain output buffers 43 and 44 that buffer the output signal from the FSK counter 38 to the output terminals 40 and 42, respectively. With the circuit shown, separate receive and transmit antennae for the read function can be connected to terminals 22, 24 and 40, 42, respectively. When a single antenna is used for both reception and transmission, which is the more common configuration, terminals 22 and 40 are jumpered together, as are terminals 24 and 42.

The write antenna 6 is connected across the read antenna inputs to the power supply 20, with a diode 45 isolating the write antenna from the read antenna input terminal 22 to prevent it from shorting out the read antenna. This function could also be accomplished with a switch that is opened after programming of the transponder from the write antenna has been completed or by providing separate input connections for the two antennae. A simple diode is preferred because it is less complex and occupies less space.

One end of the write antenna is also connected through a Schmitt trigger buffer 46, preferably to a separate write input to the demodulator 26; the use of separate read and write inputs from the read and write antennae to the demodulator circuit 26 provides an additional mechanism to prevent the read antenna from being used to program the transponder identification code. Connecting the write antenna to the demodulator allows a high programming field applied to the write antenna 6 to carry input signals for both powering the transponder circuitry, and for writing an identification code or other information into the transponder memory.

Aside from the addition of the write antenna 6, the transponder circuit shown in FIG. 3 is conventional and can be described briefly. The invention can be used with many different transponders of which FIG. 3 is only one example. The power supply 20 generates the usual positive reference (VDD) and ground reference (GND) for powering the remainder of the circuitry. It also supplies a power-on/reset (POR) signal to the control logic 30 and the memory addressing section 34 that disables this circuitry before the on-chip voltage drops low enough to allow any latched states to change, thereby avoiding errors. As VDD increases from zero, POR also issues a reset so that the circuitry correctly initializes.

The FM demodulator 26 determines whether the incoming frequency represents a valid logic LOW or HIGH level. Upon the initiation of POR, a calibration sequence is executed that indirectly computes the mean of the received FSK frequencies. Depending upon whether the input frequency FX is lower or higher than a reference frequency, the demodulator sets either a BVAL or a LBVAL input to the control logic 30.

The control logic circuit controls the initialization of the overall circuitry, interprets the bit stream from the demodulator 26, provides detailed control for the execution of valid commands, and detects error conditions to initiate appropriate responses. In the execution of a READ command, the control logic 30 is reset to await another start bit, and control of the data output process is passed to the memory addressing logic 34. For execution of a WRITE command, after the control logic has validated the inputs, the memory 32 returns a VPPOK signal if there is adequate voltage for programming. If VPPOK is HIGH, the control logic 30 sets an ERASE output until a second time-out, PROGDONE, is returned from the memory address logic 34. The control logic then sets a write enable (WE) and waits for PROGDONE again. This terminates the WRITE command execution, and the control logic enables the outputs and awaits another start bit from the demodulator 26.

The memory 32 in this example consists of 256 bits of EEPROM organized as 32 words of 8 bits each, word and bit line decoders to determine the selected bit, logic to gate the programming voltage VPP to the correct bits, and logic and sense amplifiers for bit state detection. Circuitry for detecting undervoltage conditions during programming is also included. All sequencing of the memory 32 is provided by the memory addressing logic 34 or the control logic 30.

The memory addressing logic 34 includes counters to sequence the memory 32, registers to store the READ start and stop addresses, drivers for the address bus which are compatible with the high EEPROM programming voltages, logic to control the enabling of SYNCH and ACK characters, and logic to output various timing signals.

The formatting logic 36 generates SYNCH or ACK as dictated by the memory address logic 34. The output from the formatting logic 36, identified as FORMD, is one of the current states of MEMD (from the memory 32). That is, the formatting logic output FORMD is either SYNCH or ACK, according to the state of its SYNCH and ACK inputs. The FSK counter 38 is a variable-modulus counter clocked by FX; it receives FORMD as an input from the formatting logic section 36 to provide the modulus control. The output buffers 43 and 44 are open-drain n-channel devices with disable circuitry. When the control logic output OE is LOW, the output buffers do not sink current for either state of the FSK counter output FSKOUT. When OE is HIGH, the output buffers sink current when FSKOUT is HIGH.

To verify that an identification code has been properly written into the transponder circuit, the output of FSK counter 38 can also be connected to the write antenna through a buffer 48. This allows the identification code to be read out as well as written in through the write antenna, given a strong enough RF field. In this configuration the outputs of read and write antenna buffers 28 and 46 would be connected in common to the demodulator 26 to allow the write antenna to be used for both read and write.

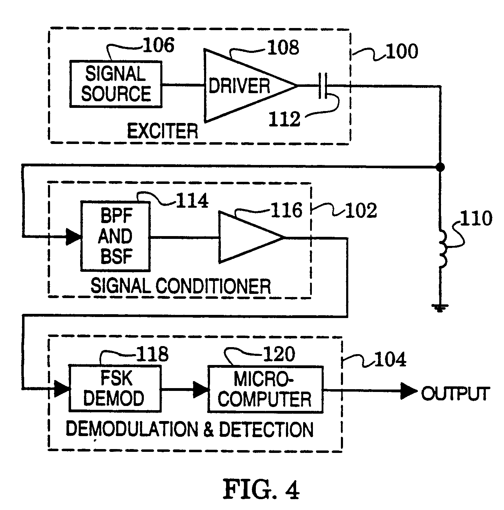

The transponder circuit can generate its identification code in response to an interrogation signal from an exciter/reader in a conventional manner, such as that described in U.S. Patent No. 4,730,188 to Milheiser. A suitable exciter/reader that can be used to read out the code, similar to that described in the Milheiser patent, is shown in block diagram form in FIG. 4. Various available exciter/readers can be used, such as the MINIPROX® reader by Hughes Identification Devices, Inc. It is shown as consisting of three main functional units: an exciter 100, signal conditioner 102 and demodulation and detection circuits 104. The exciter 100 consists of an AC signal source 106, followed by a power driver 108 which provides a high current, high voltage excitation signal to an interrogator antenna coil 110 through a capacitor 112. The interrogator coil 110 and the capacitor 112 are selected to resonate at the excitation signal frequency, so that the voltage across the coil is much greater than the voltage output from the driver.

The signal conditioner 102 connects to the interrogator coil 110 and serves to amplify the identification signal returned from the transponder's read antenna 12 while filtering out the excitation signal frequency as well as other noise and undesired signals outside the frequency range used by the transponder signals. The signal conditioner 102 includes a bandpass filter/bandstop filter 114 that actively passes the identification code signal frequencies returned from the transponder and passively excludes the high energy at the excitation frequency, and an amplifier 116.

The amplified output of the signal conditioner 102 is fed to the demodulation and detection unit 104, which includes a frequency shift keyed (FSK) demodulator 118 and a microcomputer 120. The FSK demodulator 118 is a phase-locked loop circuit, configured as a tone decoder, which gives a digital output as the signal from the transponder shifts between two frequencies. The microcomputer 120 extracts the identification code from this digital output by observing the timing of transitions between the two logic levels. The identification code obtained by the microcomputer 120 can be transferred to a display or printer, sent over communication lines to a remote point, stored on tape, disk or other storage medium, or sent to another computer.

The magnetic flux generated by the interrogator coil 110 couples energy at the exciter frequency into the transponder via the read antenna coil 12. This energy is converted to a DC voltage as described in connection with FIG. 3, and initiates an identification code transmission back from the transponder.

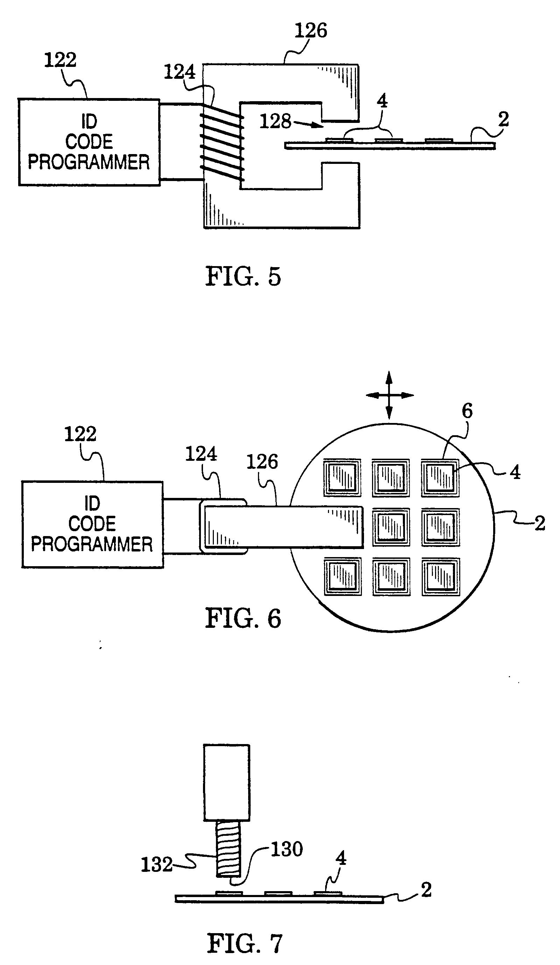

FIGs. 5 and 6 illustrate one method of programming the various transponder circuits 4 with respective identification codes while the circuits are still on the wafer 2. A high energy writing field is obtained by applying a high current writing signal from an identification code programmer 122 to a coil 124 that is wound around a ferrite "C" core 126. The wafer is inserted into the core's gap 128, where the high strength field is established. The wafer 2 is carried by a stage (not shown) that is moved in a step-and-repeat fashion to position each transponder circuit 4 and its associated write antenna 6 within the field of gap 128 in turn. The programmer 122 is selected to produce the desired code format, such as FSK or PWM. Programmers per se are known; a typical programmer is the 613 Cotag Programmer by Cotag International Inc. of Wilmington, Delaware.

In contrast to the normal field strength of 1-2 A/m used for reading an identification code from a transponder, the current level from the programmer 122 and the number of core turns 124 are selected to produce a much higher field strength at each transponder die site on the wafer, preferably in excess of 100-200 A/m. Since the write antenna 6 is so much smaller and has so many fewer turns than the read antenna provided on the transponder card, such a high field strength is necessary for the write antenna to produce a signal that is strong enough to write the code into the transponder circuit. Significantly lower fields, including field strength typically used to read from the transponder, do not produce enough of a response in the small write antenna to write any information into the transponder memory. The transponder is thus protected from inadvertent writings into its memory, either from read fields, ESD or otherwise, without the need for a special access code preceding the write data.

As an alternate to the ferrite "C" core 126 illustrated in FIGs. 5 and 6, the transducer circuits can be programmed by using a ferrite rod 130 with a drive coil 132 wound around it, again supplied from an identification code programmer. In this case the rod is positioned slightly above the write antenna for a given transponder circuit, and the step-and-repeat process consists of moving the rod from die to die over the stationary wafer.

The identification code written into the transponder by this technique is permanent, or at least does not change until the transponder's write coil is intentionally placed within a high strength writing field again. Either the entire identification code can be written in this manner, or a portion of the transponder memory can be programmed by the high field and the remainder programmed after the die is assembled into the final transponder assembly. When the entire code is written with the high rf field, the memory is non-writable; when only a portion of the memory is written with the high field, the remaining portion can remain writable.

Transducer programming at the wafer stage can be combined with or performed after the conventional step-and-repeat die test. If performed after the die test, the programming can be restricted to only those die that test good. If desired, programming can be delayed until after the wafer has been diced and the individual die incorporated into respective transponder cards. In this case the transponders would be programmed one at a time.

While particular embodiments of the invention have been shown and described, numerous variations and alternate embodiments will occur to those skilled in the art. For example, while the invention has been described primarily in terms of writing an identification code into a transponder, it is equally applicable to the writing of many other kinds of information into a transponder. Accordingly, it is intended that the invention be limited only in terms of the appended claims.

## Claims

1. A transponder, comprising:
a transponder circuit (4) having a memory (32), and respective subcircuits (26, 30, 34, 36, 38) for writing information into said memory (32) and for reading out information previously written into the memory (32),
a write antenna (6) for receiving information bearing broadcast radio frequency (RF) write signals, and for actuating said write subcircuit (26, 30, 34, 36) to write said information into said memory (32), and
a read antenna (12) for receiving broadcast RF read signals and for actuating said read subcircuit (26, 30, 34, 36) to read out information from the memory (32),
said write antenna (6) actuating said write subcircuit (26, 30, 34, 36) only in response to an RF signal that is substantially stronger than the RF signal strength required for said read antenna (12) to actuate said read subcircuit (26, 30, 34, 36).

2. The transponder of claim 1, characterized in that said write antenna (6) is substantially smaller in size than said read antenna (12).

3. The transponder of claim 1 or claim 2, characterized in that said write antenna (6) has substantially fewer turns than said read antenna (12).

4. The transponder of any of claims 1 - 3, characterized in that said write antenna (6) is substantially smaller in size than said read antenna (12).

5. The transponder of any of claims 1 - 4, characterized in that said write antenna (6) surrounds said transponder circuit (4).

6. The transponder of any of claims 1 - 5, characterized in that said read antenna (12) surrounds said write antenna (6).

7. The transponder of any of claims 1 - 6, characterized in that said transponder circuit (4) and write antenna (6) are implemented on a common integrated circuit (IC) chip (8).

8. The transponder of claim 7, characterized in that said write antenna (6) surrounds the transponder circuit (4) on said chip (8), and said read antenna (12) surrounds said chip (8).

9. The transponder of any of claims 1 - 8, characterized in that in response to equal RF field strength, said read antenna (12) produces an actuating signal for said read subcircuit (26, 30, 34, 36) that is at least 100 times greater than the actuating signal which said write antenna (6) produces for said write subcircuit (26, 30, 34, 36).

10. The transponder of any of claims 1 - 9, characterized in that said read and write antennae (6, 12) are connected respectively to said read and write subcircuits (26, 30, 34, 36) through separate respective rectifier circuits (28, 45, 46).

11. The transponder of claim 10, characterized in that the rectifier circuit (28, 45, 46) for said write antenna (6) comprises a diode (45) which is oriented to conduct from said write antenna (6) to said write subcircuit (26, 30, 34, 36).

12. The transponder of claim 11, characterized in that said read antenna (12) is connected to said write subcircuit (26, 30, 34, 36) in addition to said read subcircuit through its respective rectifier (28, 45, 46) with said diode (45) isolating said write antenna (6) from said read antenna (12).

13. The transponder of any of claims 1 - 12, characterized in that said write subcircuit (26, 30, 34, 36) permits information to be written into said memory (32) without a preceding access code.

14. A multi-function radio frequency (RF) actuated system, comprising:
first and second receiver circuits (28, 30, 34, 36) that perform different functions,
first and second antennae (12, 6) that respond to broadcast RF actuating signals above respective threshold levels by actuating said first and second receiver circuits (26, 30, 34, 36), respectively, with the threshold level for said second antenna (6) to actuate the second receiver circuit (26, 30, 34, 36) substantially exceeding the threshold level for said first antenna (12) to actuate the first receiver circuit (26, 30, 34, 36), and
a transmitter for transmitting RF actuating signals to said first and second antenna (12, 6), with the actuating signal for the first antenna (12) greater than the threshold level for that antenna but less than the threshold level for the second antenna (6), and the actuating signal for the second antenna (6) greater than the threshold level for the second antenna (6), whereby actuation of the second antenna (6) by an actuating signal for the first antenna (12) is inhibited.

15. The multi-function circuit of claim 14, characterized in that said second antenna (6) is substantially smaller in size than said first antenna (12).

16. The multi-function circuit of claim 14 or claim 15, characterized in that said second antenna (6) has substantially fewer turns than said first antenna (12).

17. The multi-function circuit of any of claims 14 - 16, characterized in that said second antenna (6) is substantially smaller than said first antenna (12).

18. The multi-function circuit of any of claims 14 - 17, characterized in that said second antenna (6) surrounds said receiver circuits (26, 30, 34, 36).

19. The multi-function circuit of any of claims 14 - 18, characterized in that said first antenna (12) surrounds said second antenna (6).

20. The multi-function circuit of any of claims 14 - 19, characterized in that said receiver circuits (26, 30, 34, 36) and said second antenna (6) are implemented on a common integrated circuit (IC) chip (8).

21. The multi-function circuit of claim 20, characterized in that said second antenna (6) surrounds said receiver circuits (26, 30, 34, 36) on said chip (8), and said first antenna surrounds said chip (8).

22. The multi-function circuit of any of claims 14 - 21, characterized in that the threshold level for actuating the second antenna (6) is at least 100 times greater than the threshold level for actuating the first antenna (12).

23. The multi-function circuit of any of claims 14 - 22, characterized in that said second receiver circuit (26, 30, 34, 36) is actuable by said second antenna (6) to perform its function without receiving a preceding access code.

24. The multi-function system of any of claims 14 - 23, characterized in that said transmitter comprises two separate transmitters, with one of said transmitters transmitting the RF actuating signal for the first antenna (12) and the other transmitter transmitting the RF actuating signal for the second antenna (6).

25. A method of writing information into the memory (32) of a transponder and reading back information from the memory (32), comprising:
transmitting a radio frequency (RF) write signal to said transponder to write information into said memory (32), and
thereafter transmitting an RF read signal to said transponder at a signal level that is sufficient to read information from said memory (32), but too low to write information into the memory (32), whereby the writing of information into the memory (32) by said signal is inhibited.

26. The method of claim 25, characterized in that said transponder is provided with write and read antennae (6, 12) for receiving said RF write and read signals, said write antenna (6) producing a transponder write signal for writing information into said memory (32), and said read antenna (12) producing a transponder read signal for reading information from said memory (32) that is substantially greater in power than the transponder write signal produced by said write antenna (6) for the same transmitted RF write and read signal powers.

27. The method of claim 26, characterized in that said write antenna (6) is substantially smaller in size than said read antenna (12).

28. The method of claim 26 or claim 27, characterized in that said write antenna (6) has substantially fewer turns than said read antenna (12).

29. The method of any of claims 26 - 28, characterized in that said write antenna (6) is substantially smaller in size than said read antenna (12).

30. The method of any of claims 26 - 29, characterized in that said transponder is initially provided as an integrated circuit (IC, 8) together with said write antenna (6) on a die area of a wafer (2) that has similar ICs (8) and write antennae (6) on other die areas, said RF write signal is transmitted to said write antenna (6) while still on said wafer (2), and the wafer (2) is thereafter separated into separate dice with the die for said transponder is provided with said read antenna (12).

31. The method of claim 30, characterized in that respective RF write signals are transmitted to said similar ICs (8) and similar write antennae (6) while they are still on said wafer (2).

32. The method of claim 31, characterized in that said RF write signals are transmitted to said ICs (8) and write antennae (6) by moving said wafer (2) in a step-and-repeat process relative to a write station.

33. A method of writing information into the memory (32) of a transponder, comprising:
providing said transponder as an integrated circuit (IC, 8) on a die area of a wafer (2) together with a write antenna (6) that responds to a radio frequency (RF) write signal by producing a transponder write signal for writing information into said memory (32).
transmitting a radio frequency (RF) write signal to said antenna (6) to write information into said memory (32) while the transponder is still on the wafer (2), and
thereafter separating said wafer (2) into separte dice (8) with a single die (8) for said transponder bearing said IC and said write antenna (6).

34. The method of claim 33, characterized in said similar additional transponder ICs (8) and write antennae (6) are provided on separate respective die areas of said wafer (2), respective RF write signals are transmitted to said similar antennae (6) to write information into the memories (32) of their respective ICs (8) while said similar ICs and antennae (6) are still on said wafer (2), and said similar transponder ICs (8) and write antennae (6) are borne by separate respective wafer dice.

35. The method of claim 34, characterized in that respective RF write signals are transmitted to said similar ICs (8) and similar write antennae (6) while they are still on said wafer (2).

36. The method of claim 35, characterized in that said RF write signals are transmitted to said ICs (8) and write antennae (6) by moving said wafer (2) in a step-and-repeat process relative to a write station.
